# EUROPÄISCHE PATENTSCHRIFT

(11) **EP 0 931 036 B1**
(45) Veröffentlichungstag und Bekanntmachung des Hinweises auf die Patenterteilung: **17.05.2000**
(21) Anmeldenummer: 97910391.8
(22) Anmeldetag: 29.09.1997
(51) Int. Cl.: C05G 3/00

(54) **VERWENDUNG EINER WÄSSRIGEN DISPERSION EINES BIOLOGISCH ABBAUBAREN POLYESTERS ZUR UMHÜLLUNG VON DÜNGEMITTELGRANULATEN**
USE OF AN AQUEOUS DISPERSION FROM A BIODEGRADABLE POLYESTER AS A SHEATHING MATERIAL FOR GRANULATED FERTILIZER
UTILISATION D'UNE DISPERSION AQUEUSE D'UN POLYESTER BIODEGRADABLE POUR ENCAPSULER DE L'ENGRAIS GRANULE

(30) Priorität: 30.09.1996 DE 19640269
(43) Veröffentlichungstag der Anmeldung: 28.07.1999
(73) Patentinhaber: BASF AKTIENGESELLSCHAFT, 67056 Ludwigshafen (DE)
(72) Erfinder: HORCHLER VON LOCQUENGHIEN, Klaus, D-67117 Limburgerhof (DE); YAMAMOTO, Motonori, D-68199 Mannheim (DE); ERHARDT, Klaus, D-69181 Leimen (DE); NGUYEN KIM, Son, D-69502 Hemsbach (DE); WARZELHAN, Volker, D-67273 Weisenheim (DE)
(86) Internationale Anmeldenummer: EP9705352
(87) Internationale Veröffentlichungsnummer: WO9814413

(56) Entgegenhaltungen:
- WO-A-96/21689
- WO-A-96/25448
- PATENT ABSTRACTS OF JAPAN vol. 096, no. 003, 29.März 1996 & JP 07 309689 A (DAINIPPON INK & CHEM INC), 28.November 1995, & DATABASE WPI Derwent Publications Ltd., London, GB; AN 96-045261

## Beschreibung

Die vorliegende Erfindung betrifft die Verwendung einer Polyesterdispersion enthaltend Wasser und einen biologisch abbaubaren Copolyester, der Struktureinheiten, die sich sowohl von aliphatischen als auch aromatischen Carbonsäure(derivate)n ableiten, enthält, sowie das unter Verwendung dieser Polyesterdispersion hergestellte umhüllte Düngemittelgranulat an sich sowie ein Verfahren zu dessen Herstellung. Ferner betrifft die vorliegende Erfindung ein Düngeverfahren, bei dem das erfindungsgemäße umhüllte Düngemittelgranulat Verwendung findet.

Es ist allgemein bekannt, als Düngemittel Düngemittelgranulate einzusetzen, die mit einer Schicht eines Polymeren umhüllt sind. Durch die Umhüllung wird die Effizienz dieser Düngemittel gesteigert, weil das umhüllte Düngemittel die den Pflanzen als Nährstoffe dienenden Stoffe zeitlich verzögert freisetzt und es so über einen langen Zeitraum seine Wirkung entfalten kann. Derartige Slow-Release-Düngemittel sind z.B. in Ullmann's Encyclopedia of Industrial Chemistry, 5. Aufl., 1987, Bd. A10, S. 363-369 beschrieben, und deren Vorteile sind in Fert. Res. von 1993, Bd. 35, S. 1 - 12 zusammengefaßt.

In der Vergangenheit wurden zahlreiche mit biologisch abbaubaren Polymeren umhüllte Düngemittelgranulate beschrieben.

So betrifft die WO 95/03260 ein Düngemittel mit einer aus zwei Schichten bestehenden Umhüllung. Dieses sowohl im Ackerbau als auch in der Hydrokultur verwendbare umhüllte Düngemittel enthält eine innere Schicht, die biologisch abbaubar ist und aus einem aliphatischen Polyester und/oder Polyurethan aufgebaut ist, und eine wasserunlösliche äußere Schicht enthaltend langsam biologisch abbaubare Polymere, wie z.B. biologisch abbaubare Cellulosederivate, niedermolekulares Polyethylen, niedermolekulares Wachs und niedermolekulare Paraffine oder ein durch Licht abbaubares Harz. Die dort beschriebenen als äußere Schicht verwendeten Polymere weisen jedoch in der Regel eine nicht zu vernachlässigende Klebrigkeit auf, was sich bei der Anwendung dieser umhüllten Düngemittel als nachteilig erweist.

Die offengelegte japanische Patentanmeldung JP 07-309689 betrifft ein Düngemittel, das mit einer hauptsächlich aus einem Milchsäure-Polyester bestehenden Umhüllung versehen ist. Dabei wird angegeben, daß insbesondere ein Milchsäure-Copolymer aus Milchsäure, einer Dicarbonsäure und einem Diol, das vorzugsweise aus Milchsäure, einer aliphatischen Dicarbonsäure, einer aromatischen Dicarbonsäure und einem Diol zusammengesetzt ist, eingesetzt wird. In der Beschreibung wird angegeben, daß der Gehalt an Milchsäure innerhalb des dort verwendeten Copolymers mindestens 50 Gew.-% beträgt.

Weitere mit biologisch abbaubaren Polymeren umhüllte Düngemittel sind in den offengelegten japanischen Patentanmeldungen 08-2989, 07-315976, 08-26875, 07-33577 sowie 05-97561 beschrieben, wobei dort aliphatische Polyester, Poly(hydroxycarbonsäuren), Cellulose sowie Polymere, die eine dieser Komponenten als Hauptkomponente aufweisen, als Umhüllung verwendet werden.

Umhüllte Düngemittelgranulate, die mit einem Carboxylgruppen-tragenden Ethylencopolymerisat umhüllt sind, werden in der deutschen Patentanmeldung 195 21 502.8 beschrieben.

An die umhüllten Düngemittelgranulate werden jedoch in zunehmendem Maße höhere Anforderungen bezüglich einfacher und wirtschaftlicher Herstellbarkeit sowie deren anwendungstechnischer Eigenschaften gestellt, insbesondere auch deshalb, da das Ausbringen der Düngemittelgranulate auf den Acker mit immer schnelleren, leistungsfähigeren Maschinen durchgeführt wird, was besondere Anforderungen an die mechanische Festigkeit der umhüllten Düngemittelgranulate und dabei insbesondere an die Umhüllungen stellt.

Allgemein sollen die als Umhüllungen verwendeten Polymere sich ohne Verwendung von organischen Lösungsmitteln auf das Düngemittelausgangsgranulat aufbringen lassen. Weiterhin soll die Polymermenge, die zur Umhüllung des Granulats benötigt wird, um eine ausreichende Retardwirkung zu erzielen, möglichst gering sein.

Daneben sollen die umhüllten Düngemittelgranulate nicht zum Verkleben neigen, insbesondere bei Temperaturen, wie sie üblicherweise bei ihrer Lagerung oder beim Transport auftreten, ohne daß hierzu besondere Vorkehrungen erforderlich wären. Dies bedeutet jedoch, daß die umhüllten Düngemittelgranulate auch bei Temperaturen, die erheblich über Raumtemperatur (25 °C) liegen, nahezu keine Klebrigkeit aufweisen dürfen.

Andererseits dürfen die für die Umhüllung verwendeten Polymere keine zu hohe Härte und Sprödigkeit aufweisen, da die Umhüllung sonst bei mechanischer Beanspruchung der umhüllten Düngemittelgranulate, wie sie beispielsweise beim Umfüllen oder insbesondere beim maschinellen Verstreuen auftritt, beschädigt werden oder gar abplatzen kann.

Die oben beschriebenen Düngemittelgranulate des Standes der Technik sind bislang nicht in der Lage, all diesen Anforderungen gerecht zu werden. Probleme treten dabei insbesondere bezüglich der Klebrigkeit (insbesondere bei Polyurethanen) und der unzureichenden mechanischen Eigenschaften (insbesondere bei aliphatischen Polyestern) auf.

Ferner weisen die erfingsgemäß verwendeten Copolyester gute Filmbildungseigenschaften auf, was dazu führt, daß zum Erzeugen einer stabilen Schicht lediglich geringe Mengen des Copolyesters nötig sind, was unter Kostengesichtspunkten vorteilhaft ist.

Zum Dispergieren der Copolyester kann weitgehend oder vollständig auf organische Lösungsmittel verzichtet werden, so daß bei der Herstellung der erfingsgemäßen Dispersionen die mit der Verwendung organischer Lösungsmittel einhergehenden Probleme, wie z.B. Toxizität, Entsorgung und Explosionsgefahr, (weitgehend) vermieden werden können.

Die Aufgabe der vorliegenden Erfindung besteht demgemäß darin, ein umhülltes Düngemittelgranulat bereitzustellen, das das vorgenannte Anforderungsprofil erfüllt.

Demgemäß betrifft die vorliegende Erfindung die Verwendung zur Umhüllung von Düngemittelgranulaten einer Polyesterdispersion enthaltend
(A) 20 bis 90 Gew.-% Wasser und
(B) 10 bis 80 Gew.-% eines biologisch abbaubaren Copolyesters (B), enthaltend Struktureinheiten, die sich sowohl von aliphatischen als auch aromatischen Carbonsäure(derivate)n ableiten,
   erhältlich durch Umsetzung eines Gemisches, das umfaßt:
   (a1) ein Gemisch, umfassend
      (a11) 10 bis 95 mol-% einer aliphatischen Dicarbonsäure oder einer cycloaliphatischen Dicarbonsäure oder eines esterbildenden Derivats davon oder eines Gemisches aus zwei oder mehr davon,
      (a12) 5 bis 90 mol-% einer aromatischen Dicarbonsäure oder eines esterbildenden Derivats davon oder eines Gemisches aus zwei oder mehr davon,
      (a13) 0 bis 10 mol-% einer sulfonatgruppenhaltigen Verbindung oder eines Gemisches aus zwei oder mehr davon,
      wobei die Summe der einzelnen mol-%-Angaben 100 beträgt,
   (a2) eine Dihydroxyverbindung oder einen Aminoalkohol oder ein Gemisch aus zwei oder mehr davon,
   wobei man das Molverhältnis von (a1) zu (a2) im Bereich von 0,4:1 bis 2,5:1 wählt,
   (a3) 0 bis 10 Gew.-%, bezogen auf das Gemisch (a1), eines Kettenverlängerungsmittels oder eines Gemisches aus zwei oder mehr davon, und
   (a4) 0 bis 20 Gew.-%, bezogen auf das Gemisch (a1), einer Verbindung mit mindestens drei zur Esterbildung befähigten Gruppen oder eines Gemisches aus zwei oder mehr davon,
wobei
die von der (cyclo)aliphatischen und aromatischen Carbonsäure abgeleiteten wiederkehrenden Einheiten statistisch oder alternierend verteilt sind, der Copolyester eine Viskositätszahl im Bereich von 5 bis 450 ml/g (gemessen in o-Dichlorbenzol/Phenol (Gew.-Verhältnis 50/50) bei einer Konzentration von 0,5 Gew.-% Copolyester bei einer Temperatur von 25 °C) aufweist, und der Anteil der Komponenten (a13) und (a4) nicht gleichzeitig jeweils Null beträgt.

Die innerhalb der erfindungsgemäß verwendeten wäßrigen Polyesterdispersion eingesetzten biologisch abbaubaren Copolyester, die wiederkehrende Einheiten enthalten, die sich sowohl von aromatischen Carbonsäure(derivate)n als auch von aliphatischen Carbonsäure(derivate)n ableiten, sind an sich bekannt und in der US 5 446 079 sowie der parallelen internationalen Anmeldung WO 92/09654, in der DE-A-44 32 161 und in einer Reihe von Anmeldungen der Anmelderin selbst (P 44 40 858.7, P 44 40 850.1, P 44 40 837.4, P 44 40 836.6, 195 00 757.0, 195 00 756.5, 195 00 755.7, 195 00 754.9, 195 05 185.8, 195 05 186.6) beschrieben.

Im folgenden sollen dennoch die im Rahmen der vorliegenden Erfindung vorzugsweise verwendeten wäßrigen Dispersionen eines biologisch abbaubaren Copolyesters beschrieben werden.

Der Begriff "biologisch abbaubar", wie er im Rahmen der vorliegenden Anmeldung verwendet wird, bezeichnet die Tatsache, daß die Copolyester nach erfindungsgemäßer Anwendung unter Umwelteinflüssen in einer angemessenen und nachweisbaren Zeitspanne zerfallen. Dabei erfolgt der Abbau in der Regel hydrolytisch und/oder oxidativ, zum überwiegenden Teil jedoch durch Einwirkung von Mikroorganismen wie Bakterien, Hefen, Pilzen und Algen. Der Abbau kann jedoch auch enzymatisch erfolgen, wie z.B. von Y. Tokiwa und T. Suzuki in "Nature", Bd. 270, S. 76-78, 1977, beschrieben. Dabei ist es im Rahmen der vorliegenden Erfindung durch eine entsprechende Wahl des Verhältnisses zwischen wiederkehrenden Einheiten, die sich aus aliphatischen Carbonsäuren herleiten, und solchen, die sich aus aromatischen Carbonsäuren herleiten, möglich, die Geschwindigkeit des biologischen Abbaus, d.h. den Zeitpunkt, bis zu dem die erfindungsgemäß verwendeten Polyester im wesentlichen vollständig abgebaut sind, zu variieren. Dabei gilt als Faustregel, daß die Copolyester umso schneller biologisch abbaubar sind, je höher der Anteil an wiederkehrenden Einheiten, die sich von aliphatischen Carbonsäuren herleiten, ist. Ferner sind die Copolyester umso schneller biologisch abbaubar, je höher der Anteil an Abschnitten mit alternierender Abfolge von wiederkehrenden Einheiten, die sich von aliphatischen und aromatischen Carbonsäure(derivate)n ableiten, ist.

Ferner kann die Freisetzung des Nährstoffs auch durch die Anzahl der Schichten sowie die Dicke derselben gesteuert werden.

Die erfindungsgemäß verwendete Polyesterdispersion enthält ungefähr 10 bis ungefähr 90, vorzugsweise ungefähr 10 bis ungefähr 65 und weiter bevorzugt ungefähr 15 bis ungefähr 40 Gew.-% Feststoff, d.h. des erfingsgemäß verwendeten Copolyesters.

Die im Rahmen der vorliegenden Erfindung verwendbaren aliphatischen Dicarbonsäuren besitzen im allgemeinen 2 bis 10 Kohlenstoffatome, vorzugsweise 4 bis 6 Kohlenstoffatome. Die im Rahmen der vorliegenden Erfindung verwendbaren cycloaliphatischen Dicarbonsäuren sind solche mit 7 bis 10 Kohlenstoffatomen und insbesondere solche mit 8 Kohlenstoffatomen. Prinzipiell können jedoch auch Dicarbonsäuren mit einer größeren Anzahl an Kohlenstoffatomen, d.h. mit bis zu 30 Kohlenstoffatomenen, eingesetzt werden.

Beispielshaft zu nennen sind: Malonsäure, Bernsteinsäure, Glutarsäure, Adipinsäure, Pimelinsäure, Acelainsäure, Sebacinsäure, Fumarsäure, 2,2-Dimethylglutarsäure, Suberinsäure, 1,3-Cyclopentandicarbonsäure, 1,4-Cyclohexandicarbonsäure, 1,3-Cyclohexandicarbonsäure, Diglykolsäure, Itaconsäure, Maleinsäure und 2,5-Norbornandicarbonsäure, wobei Adipinsäure bevorzugt ist.

Als esterbildende Derivate der oben genannten Dicarbonsäuren sind insbesondere die Di-C₁-C₆-Alkylester, wie z.B. Dimethyl-, Diethyl-, Dipropyl-, Dibutyl-, Dipentyl- und Dihexylester zu nennen.

Dabei können die Dicarbonsäuren oder esterbildenden Derivate davon einzeln oder als Gemisch aus zwei oder mehr davon eingesetzt werden.

Vorzugsweise werden Adipinsäure oder deren esterbildende Derivate und Sebacinsäure oder deren esterbildende Derivate, insbesondere Adipinsäure oder deren esterbildende Derivate, eingesetzt.

Der Anteil der (cyclo)aliphatischen Dicarbonsäure oder deren esterbildenden Derivate beträgt im allgemeinen ungefähr 10 bis 95, vorzugsweise ungefähr 20 bis ungefähr 50 und insbesondere ungefähr 25 bis ungefähr 35 mol-%, jeweils bezogen auf die Gesamtmenge der Komponenten (a11) bis (a13).

Als aromatische Dicarbonsäure sind im allgemeinen solche mit 8 bis 12 Kohlenstoffatomen und vorzugsweise solche mit 8 Kohlenstoffatomen zu nennen. Beispielshaft erwähnt seien Terephthalsäure, Isophthalsäure, 2,6-Naphthoesäure und 1,5-Naphthoesäure sowie esterbildende Derivate davon. Dabei sind insbesondere die Di-C₁-C₆-Alkylester, wie z.B. Dimethyl-, Diethyl-, Dipropyl-, Dibutyl-, Dipentyl- oder Dihexylester zu nennen.

Prinzipiell können jedoch auch aromatische Dicarbonsäuren mit einer größeren Anzahl an Kohlenstoffatomen eingesetzt werden.

Die aromatischen Dicarbonsäuren oder deren esterbildende Derivate (a12) können einzeln oder als Gemisch aus zwei oder mehr davon eingesetzt werden.

Der Anteil der aromatischen Dicarbonsäuren oder esterbildenden Derivaten davon beträgt im allgemeinen ungefähr 5 bis ungefähr 90, vorzugsweise ungefähr 50 bis ungefähr 80 und insbesondere ungefähr 65 bis ungefähr 75 mol-%, jeweils bezogen auf die Gesamtmenge der Komponenten (a11) bis (a13).

Als sulfonatgruppenhaltige Verbindung (a13) setzt man im Rahmen der vorliegenden Erfindung üblicherweise ein Alkali- oder Erdalkalimetallsalz einer sulfonatgruppenhaltigen Dicarbonsäure oder deren esterbildende Derivate ein, bevorzugt Alkalimetallsalze der 5-Sulfoisophthalsäure oder deren Gemische, insbesondere das Natriumsalz. Der Anteil der sulfonatgruppenhaltigen Verbindung (a13) beträgt 0 bis ungefähr 10, vorzugsweise 0 bis ungefähr 5 und insbesondere ungefähr 3 bis ungefähr 5 mol-%, jeweils bezogen auf den Gesamtgehalt der Komponenten (a11) bis (a13).

Dabei können die sulfonatgruppenhaltigen Verbindungen einzeln oder als Gemisch aus zwei oder mehr davon eingesetzt werden.

Als Komponente (a2) werden erfindungsgemäß eine Dihydroxyverbindung oder ein Aminoalkohol oder ein Gemisch aus zwei oder mehr davon eingesetzt. Dabei sind prinzipiell alle bei der Esterherstellung bekannten Diole oder Aminoalkohole einsetzbar.

Im allgemeinen werden jedoch (a2l) Alkandiole mit 2 bis 12 Kohlenstoffatomen, vorzugsweise 4 bis 6 Kohlenstoffatomen, oder Cycloalkandiole mit 5 bis 10 Kohlenstoffatomen, (a22) Polyetherdiole, d.h. Ethergruppen enthaltende Dihydroxyverbindungen, und (a23) Aminoalkohole mit 2 bis 12 Kohlenstoffatomen, vorzugsweise 2 bis 4 Kohlenstoffatomen, sowie Aminocycloalkohole mit 5 bis 10 Kohlenstoffatomen eingesetzt.

Beispielshaft zu nennen sind Ethylenglykol, 1,2-, 1,3-Propandiol, 1,2-, 1,4-Butandiol, 1,5-Pentandiol, 2,4-Dimethyl-2-ethylhexan-1,3-diol, 2,2-Dimethyl-1,3-propandiol, 2-Ethyl-2-butyl-1,3-propandiol, 2-Ethyl-2-isobutyl-1,3-propandiol, 2,2,4-Trimethyl-1,6-hexandiol, insbesondere Ethylenglykol, 1,3-Propandiol, 1,4-Butandiol und 2,2-Dimethyl-1,3-propandiol (Neopentylglykol); Cyclopentandiol, 1,4-Cyclohexandiol, 1,2-, 1,3- und 1,4-Cyclohexandimethanol und 2,2,4,4-Tetramethyl-1,3-cyclobutandiol;
Diethylenglykol, Triethylenglykol, Polyethylenglykol, Polypropylenglykol und Polytetrahydrofuran, insbesondere Diethylenglykol, Triethylenglykol und Polyethylenglykol, oder deren Gemische, oder Verbindungen, die eine unterschiedliche Anzahl von Ethereinheiten aufweisen, beispielsweise Polyethylenglykol, das Propyleneinheiten enthält und beispielsweise durch Polymerisation nach an sich bekannten Methoden von zuerst Ethylenoxid und anschließend Propylenoxid erhalten werden kann. Das Molekulargewicht (Mn) der einsetzbaren Polyethylenglykole beträgt in der Regel ungefähr 250 bis ungefähr 8.000, vorzugsweise ungefähr 600 bis ungefähr 3.000 g/mol;
4-Aminomethylcyclohexanmethanol, 2-Aminoethanol, 3-Aminopropanol, 4-Aminobutanol, 5-Aminopentanol, 6-Aminohexanol; Aminocyclopentanol und Aminocyclohexanol; oder deren Gemische.

Dabei können die Dihydroxyverbindungen oder Aminoalkohole einzeln oder als Gemisch aus zwei oder mehr davon eingesetzt werden.

Das Molverhältnis von (a1) zu (a2) wird im allgemeinen im Bereich von ungefähr 0,4:1 bis ungefähr 2,5:1, vorzugsweise im Bereich von ungefähr 0,5:1 bis ungefähr 1,5:1, weiter bevorzugt bei ungefähr 0,5:1 bis ungefähr 1,2:1, und insbesondere im Bereich von ungefähr 0,5:1 bis ungefähr 1:1, gewählt.

Die Molverhältnisse von (al) zu (a2) im isolierten Copolyester betragen (gegebenenfalls nach dem Entfernen der gewünschten Menge an überschüssiger Komponente (a2)) ungefähr 0,4:1 bis ungefähr 1,5:1, vorzugsweise ungefähr 0,5:1 bis ungefähr 1,2:1 und insbesondere ungefähr 0,5:1 bis ungefähr 1:1.

Als Kettenverlängerungsmittel (a3) können im allgemeinen alle bei der Herstellung von Polyestern gebräuchlichen Kettenverlängerungsmittel eingesetzt werden. Deren Anteil liegt, sofern sie verwendet werden, bei ungefähr 0,01 bis ungefähr 10, vorzugsweise bei ungefähr 0,05 bis ungefähr 5, weiter bevorzugt bei ungefähr 0,07 bis ungefähr 3, und insbesondere bei ungefähr 0,1 bis ungefähr 1 Gew.-%, jeweils bezogen auf das Gemisch (a1).

Unter den hier eingesetzten Kettenverlängerungsmitteln sind Diisocyanate, wie z.B. Toluylen-2,4-diisocyanat, Toluylen-2,6-diisocyanat, 4,4'- und 2,4'-Diphenylmethandiisocyanat, Naphthylen-1,5-diisocyanat, Xylylen-diisocyanat, Hexamethylendiisocyanat, Isophorondiisocyanat und Methylen-bis(4-isocyanatocyclohexan), insbesondere Hexamethylendiisocyanat; trifunktionelle Isocyanat-Verbindungen, die Isocyanurat- und/oder Biuretgruppen mit einer Funktionalität nicht kleiner als 3 enthalten können; Divinylether, wie z.B. 1,4-Butandiol-divinylether, 1,6-Hexandiol-divinylether und 1,4-Cyclohexandimethanoldivinylether; sowie 2,2'-Bisoxazoline der allgemeinen Formel (I) 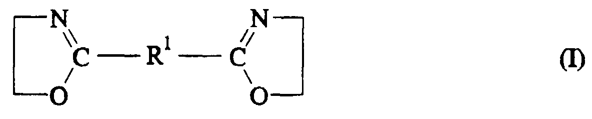 zu nennen.

Letztere sind im allgemeinen erhältlich durch das Verfahren aus Angew. Chem. Int. Edit., Vol. 11 (1972), S. 287-288. Als besonders bevorzugte Bisoxazoline sind solche, in denen R¹ eine Einfachbindung, eine (CH₂)_{q}-Alkylengruppe mit q = 2, 3 oder 4 wie Methylen, Ethan-1,2-diyl, Propan-1,3-diyl, Propan-1,2-diyl, Butan-1,4-diyl oder eine Phenylengruppe bedeutet, zu nennen. Insbesondere bevorzugt sind 2,2'-Bis(2-oxazolin), Bis(2-oxazolinyl)methan, 1,2-Bis(2-Oxazolinyl)ethan, 1,3-Bis(2-oxazolinyl)propan, 1,4-Bis(2-oxazolinyl)butan, 1,4-Bis(2-oxazolinyl)benzol, 1,2-Bis(2-oxazolinyl)benzol und 1,3-Bis(2-oxazolinyl)benzol.

Dabei können die Kettenverlängerungsmittel (a3) auch als Gemisch aus zwei oder mehr davon eingesetzt werden.

Des weiteren kann eine Verbindung mit mindestens drei zur Esterbildung befähigten Gruppen (a4) oder ein Gemisch aus zwei oder mehr davon eingesetzt werden, und zwar, sofern sie vorhanden sind, in einer Menge von ungefähr 0,01 bis ungefähr 20, vorzugsweise von ungefähr 1 bis ungefähr 10, besonders bevorzugt von ungefähr 3 bis ungefähr 7, und insbesondere von ungefähr 3 bis ungefähr 5 Gew.-%, jeweils bezogen auf das Gemisch (a1).

Die als Verbindungen (a4) eingesetzten Verbindungen enthalten vorzugsweise 3 bis 10 funktionelle Gruppen, welche zur Ausbildung von Esterbindungen befähigt sind. Besonders bevorzugte Verbindungen (a4) besitzen 3 bis 6 funktionelle Gruppen dieser Art im Molekül, insbesondere 3 bis 6 Hydroxylgruppen und/oder Carboxylgruppen. Insbesondere bevorzugt werden tri- und/oder tetrafunktionelle Carbonsäuren oder Derivate davon eingesetzt. Beispielhaft seien genannt: Weinsäure, Zitronensäure, Äpfelsäure, Trimethylolpropan, Trimethylolethan, Pentaerythrit, Polyethertriole, Glycerin, Trimesinsäure, Trimellitsäure, -anhydrid, Pyromellitsäure, -dianhydrid und Hydroxyisophthalsäure.

Durch Zusatz der Kettenverlängerungsmittel (a3) und/oder der Verbindungen (a4) kann man beispielsweise die Schmelzviskosität, die Grenzviskositätszahl bzw. das Molekulargewicht in gewünschter Weise verändern, d.h. verglichen mit Polyestern, denen keine der Kettenverlängerungsmittel (a3) und/oder Verbindungen (a4) zugesetzt wurden, die Grenzviskositätszahl und das Molekulargewicht entsprechend erhöhen und so die mechanischen Eigenschaften der Polyester entsprechend der jeweiligen Anwendung variieren.

Dabei ist zu beachten, daß erfindungsgemäß stets mindestens eine Komponente (a13) und/oder (a4) vorhanden sein muß, damit der Copolyester über freie Säuregruppen verfügt.

In einer weiteren Ausführungsform betrifft die vorliegende Erfindung die Verwendung zur Umhüllung von Düngemittelgranulaten einer Polyesterdispersion enthaltend
(A) 20 bis 90 Gew.-% Wasser und
(B) 10 bis 80 Gew.-% eines biologisch abbaubaren Copolyesters (B1), enthaltend Struktureinheiten, die sich sowohl von aliphatischen als auch aromatischen Carbonsäure(derivate)n ableiten,
   erhältlich durch Umsetzung eines Gemisches, das umfaßt:
   (a1) ein Gemisch, umfassend
      (a11) 10 bis 95 mol-% einer aliphatischen Dicarbonsäure oder einer cycloaliphatischen Dicarbonsäure oder eines esterbildenden Derivats davon oder eines Gemisches aus zwei oder mehr davon,
      (a12) 5 bis 90 mol-% einer aromatischen Dicarbonsäure oder eines esterbildenden Derivats davon oder eines Gemisches aus zwei oder mehr davon,
      (a13) 0 bis 10 mol-% einer sulfonatgruppenhaltigen Verbindung oder eines Gemisches aus zwei oder mehr davon,
      wobei die Summe der einzelnen mol-%-Angaben 100 beträgt,
   (a2) eine Dihydroxyverbindung oder einen Aminoalkohol oder ein Gemisch aus zwei oder mehr davon,
   wobei man das Molverhältnis von (a1) zu (a2) im Bereich von 0,4:1 bis 2,5:1 wählt,
   (a3) 0 bis 10 Gew.-%, bezogen auf das Gemisch (a1), eines Kettenverlängerungsmittels oder eines Gemisches aus zwei oder mehr davon,
   (a4) 0 bis 20 Gew.-%, bezogen auf das Gemisch (a1), einer Verbindung mit mindestens drei zur Esterbildung befähigten Gruppen oder eines Gemisches aus zwei oder mehr davon,
   (b1) 0,01 bis unter 50 Gew.-%, bezogen auf das Gemisch (a1), einer Hydroxycarbonsäure (b1), die durch die folgenden Formeln IIa oder IIb definiert ist

      HO―[―C(O)―G―O―]ₚH (IIa)

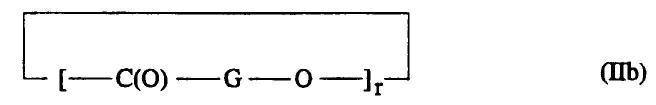

      in denen p eine ganze Zahl von 1 bis 1.500 und r 1, 2, 3 oder 4 bedeuten, und G für eine Phenylen-, -(CH₂)ₙ-, wobei n eine ganze Zahl von 1, 2, 3, 4 oder 5 bedeutet, eine -C(R)H- oder eine -C(R)HCH₂-Gruppe steht, wobei R Methyl oder Ethyl ist,
   oder eines Gemisches aus zwei oder mehr davon,
   wobei die von der (cyclo)aliphatischen und aromatischen Carbonsäure abgeleiteten wiederkehrenden Einheiten statistisch verteilt sind, der Copolyester eine Viskositätszahl im Bereich von 5 bis 450 ml/g (gemessen in o-Dichlorbenzol/Phenol (Gew.-Verhältnis 50/50) bei einer Konzentration von 0,5 Gew.-% Copolyester bei einer Temperatur von 25 °C) aufweist, und der Anteil der Komponente (a13) und (a4) nicht gleichzeitig jeweils Null beträgt.

In obiger Formel beträgt p vorzugsweise 1 bis ungefähr 1000; r bedeutet vorzugsweise 1 oder 2; und n bedeutet vorzugsweise 1 oder 5.

Vorzugsweise beträgt der Gehalt an Hydroxycarbonsäure (b1) im zur Umsetzung gebrachten Gemisch ungefähr 0,1 bis 30 Gew.-%, bezogen auf das Gemisch (a1).

Vorzugsweise setzt man als Hydroxycarbonsäure (bl) Glykolsäure, D-, L-, D, L-Milchsäure, 6-Hydroxyhexansäure, deren cyclische Derivate wie Glycolid (1,4-Dioxan-2,5-dion), D-, L-Dilactid (3,6-Dimethyl-1,4-dioxan-2,5-dion), p-Hydroxybenzoesäure sowie deren Oligomere und Polymere wie 3-Polyhydroxybuttersäure, Polyhydroxyvaleriansäure, Polylactid (beispielsweise als EcoPLA® (Fa. Cargill) erhältlich) sowie ein Gemisch aus 3-Polyhydroxybuttersäure und Polyhydroxyvaleriansäure (letzteres ist unter dem Namen Biopol® von Zeneca erhältlich) ein, wobei die oben definierten niedermolekularen und cyclischen Derivate eingesetzt werden.

Selbstverständlich kann man auch Gemische aus zwei oder mehr der oben definierten Hydroxycarbonsäuren einsetzen.

In einer weiteren Ausführungsform werden unter Verwendung der cyclischen Derivate der oben beschriebenen Hydroxycarbonsäuren (b1) bei der Umsetzung mit dem erfindungsgemäß verwendeten biologisch abbaubaren Copolyester durch eine sogenannte "ringöffnende Polymerisation" in an sich bekannter Weise Copolyester der oben definierten Art erhalten, die Blockstrukturen bestehend aus dem erfindungsgemäß verwendeten Copolyester (B), die über jeweils mindestens eine Hydroxycarbonsäure-Einheit (b1) miteinander verbunden sind, enthalten (zur "ringöffnenden Polymerisation" siehe Encyclopedia of Polymer Science and Engineering, Bd. 12, 2. Ed., John Wiley & Sons, 1988, S. 36-41).

Im Rahmen der vorliegenden Erfindung besonders bevorzugt verwendete Copolyester weisen die folgende Zusammensetzung bezüglich der Komponenten (a11), (a12) und (a2) auf, wobei zu berücksichtigen ist, daß diese Copolyester sowohl Sulfonsäuregruppen aufweisen können als auch die als Komponenten (a3) und (a4) definierten Kettenverlängerungsmittel und/oder Verbindungen enthalten. Die nach der jeweiligen Komponente in Klammern gesetzten Werte entsprechen dem Anteil der Komponenten, ausgedrückt in mol-%:
Terephthalsäure (75) - Adipinsäure (25) - Neopentylglykol (100),
Terephthalsäure (70) - Adipinsäure (30) - Butandiol (100),
TS (70) - Adipinsäure (25) - Isophthalsäure (5) - Neopentylglykol (100).

Die erfindungsgemäß verwendeten Copolyester sind durch die folgenden Merkmale charakterisiert:

Sie weisen eine Viskositätszahl im Bereich von ungefähr 5 bis 450 ml/g, vorzugsweise ungefähr 50 bis ungefähr 350 ml/g, weiter bevorzugt ungefähr 100 bis ungefähr 350 ml/g und insbesondere ungefähr 200 bis ungefähr 350 ml/g, jeweils gemessen im o-Dichlorbenzol/Phenol (Gew.-Verhältnis 50/50) bei einer Konzentration von 0,5 Gew.-% Copolyester bei einer Temperatur von 25 °C, auf.

Ferner besitzt der erfindungsgemäß verwendete Copolyester sowohl Hydroxyl- als auch Carboxylendgruppen.

Die Hydroxylzahl der erfindungsgemäß verwendeten Copolyester beträgt 0 bis ungefähr 30, vorzugsweise 0 bis ungefähr 20 und insbesondere 0 bis ungefähr 10.

Bezüglich weiterer Details über die im Rahmen der vorliegenden Erfindung verwendbaren (cyclo)aliphatischen Dicarbonsäuren, aromatischen Dicarbonsäuren, Diole und/oder Aminoalkohole sowie der weiteren Komponenten (a3), (a4) und (b1) wird auf die eingangs bei der Diskussion des Standes der Technik genannten Patentanmeldungen der Anmelderin sowie die US 5 446 079 bzw. die parallele Anmeldung W092/09654 verwiesen, deren Inhalt bezüglich der dort beschriebenen Copolyester und deren Herstellung durch Bezugnahme in die vorliegende Anmeldung miteinbezogen wird.

Dennoch soll im folgenden auch auf die Herstellung der erfindungsgemäß verwendeten Copolyester an sich kurz eingegangen werden.

Diese Herstellung von Polyestern ist grundsätzlich bekannt (Sorensen und Campbell, "Preparative Methods of Polymer Chemistry", Interscience Publishers, Inc., New York, 1961, S. 111-127; Encyclopedia of Polymer Science and Engineering, Bd. 12, 2. Ed., John Wiley & Sons, 1988, S. 1-75; Kunststoffhandbuch, Bd. 3/1, Carl Hanser Verlag, München, 1992, S. 15-23 (Herstellung von Polyestern) sowie in den vorstehend erwähnten Patentanmeldungen).

So kann man beispielsweise die Umsetzung von in (a1) enthaltenen Dimethylestern der Dicarbonsäuren (a11/a12) mit der Komponente (a2) ("Umesterung") und ggf. der Komponenten (a13) und/oder (b1) bei Temperaturen im Bereich von ungefähr 160 bis ungefähr 230 °C in der Schmelze bei Atmosphärendruck, vorzugsweise unter Inertgasatmosphäre, durchführen.

Vorteilhaft wird bei der Herstellung des erfindungsgemäß verwendeten biologisch abbaubaren Copolyesters ein molarer Überschuß der Komponente (a2), bezogen auf die eingesetzten Dicarbonsäuren, verwendet, beispielsweise bis maximal zum ungefähr 2,5fachen, vorzugsweise bis zum ungefähr 1,5fachen.

Üblicherweise erfolgt die Herstellung des oben genannten Copolyesters unter Zugabe von geeigneten, an sich bekannten Katalysatoren wie Metallverbindungen auf der Basis folgender Elemente wie Ti, Ge, Zn, Fe, Mn, Co, Zr, V, Ir, La, Ce, Li und Ca, vorzugsweise metallorganischen Verbindungen auf der Basis dieser Metalle wie Salze organischer Säuren, Alkoxide, Acetylacetonate und ähnliches, insbesondere auf Basis von Zn, Sn und Ti.

Die Umsetzung der Komponenten (a1), (a2) und ggf. (b1) wird in der Regel unter vermindertem Druck oder in einem Inertgasstrom, beispielsweise unter Stickstoff, bei weiterem Erhitzen auf eine Temperatur im Bereich von 180 bis 260 °C bis zum gewünschten Molekulargewicht unter Berücksichtigung des gewünschten Molverhältnisses der Carboxylendgruppen zu Hydroxylendgruppen, durchgeführt. Anschließend können (a3) und/oder (a4) in der Regel bei Normaldruck bei einer Temperatur im Bereich von ungefähr 50 bis ungefähr 200°C, vorzugsweise unter Inertgas zugegeben und die Umsetzung fortgeführt werden.

Um unerwünschte Abbau- und/oder Nebenreaktionen zu vermeiden, kann man in dieser Verfahrensstufe - falls erwünscht - auch Stabilisatoren zusetzen, wobei deren Gehalt so niedrig wie möglich eingestellt werden sollte und im allgemeinen bei 0,1 bis 200 ppm, bezogen auf den Copolyester, liegt. Solche Stabilisatoren sind z.B. Phosphor-Verbindungen, wie sie beispielsweise in der EP-A 13 461, der US 4 328 049 und den oben erwähnten Patentanmeldungen der Anmelderin beschrieben sind.

Auch die Herstellung von Polyesterdispersionen ist an sich bekannt und ist u.a. in der US 3 546 008, EP-A-0 332 980 sowie der EP-A-0 498 156, deren Inhalt bezüglich der dort beschriebenen Herstellung von Polyester-dispersionen durch Bezugnahme in die vorliegende Anmeldung miteinbezogen wird, beschrieben.

Zur Herstellung der erfindungsgemäß verwendeten wäßrigen Polyesterdispersion wird zunächst der erfindungsgemäß verwendete Copolyester (B) bzw. der Copolyester (B1) wie oben ausführlich diskutiert hergestellt und anschließend der so hergestellte Copolyester in einem wäßrigen Medium unter Verwendung eines geeigneten Neutralisationsmittels neutralisiert und dispergiert.

Dazu wird im allgemeinen wie folgt vorgegangen: Der Copolyester wird in der Regel noch als heiße Schmelze, die eine Temperatur im Bereich von ungefähr 150 bis ungefähr 230 °C aufweist, mit einer wäßrigen Lösung oder Dispersion eines Neutralisationsmittels versetzt. Die Viskosität der Schmelze wird dabei über das Drehmoment derselben in Lösung bestimmt. Die Menge des zugefügten Neutralisationsmittels wird so gewählt, daß dieses in der Lage ist, die Säuregruppen teilweise bis vollständig zu neutralisieren, wobei "teilweise Neutralisation" im Kontext der vorliegenden Erfindung einen Neutralisationsgrad von ungefähr mindestens 70% der im Polyester enthaltenen Carboxylgruppen bedeutet. Das Wasser wird in der Regel in einer solchen Menge zugegeben, daß eine wäßrige Polyester-Dispersion mit einem Gehalt an Polyester von ungefähr 10 bis ungefähr 90 Gew.-%, vorzugsweise ungefähr 10 bis ungefähr 65 Gew.-%, entsteht. Das Neutralisationsmittel kann zwar auch im Überschuß zugegeben werden, bringt jedoch bei der praktischen Anwendung keinerlei Vorteile.

Wie oben bereits ausgeführt, wird die Zugabe des Gemisches aus Wasser und einem Neutralisationsmittel in die Polyester-Schmelze bei Temperaturen der Schmelze im Bereich von ungefähr 150 bis ungefähr 230 °C, vorzugsweise bei Temperaturen von ungefähr 150 bis ungefähr 200 °C, vorgenommen. Eine Temperatur von ungefähr 150 °C sollte jedoch nicht unterschritten werden, weil sonst die Gefahr besteht, daß keine feindisperse Verteilung des Polyesters in Wasser erhalten wird. Die Herstellung der wäßrigen Polyester-Dispersion aus der Schmelze kann auch so erfolgen, daß man zunächst bis etwa zur Hälfte der erforderlichen Menge an Wasser langsam zugibt, dann das Neutralisationsmittel zufügt und erst zum Schluß die verbleibende Menge des Wassers zugibt. Bei der Zugabe von Wasser bzw. des Gemisches aus Wasser und dem Neutralisationsmittel zu der Schmelze sinkt die Temperatur derselben.

Nach Beendigung des Eintrags des Neutralisationsmittel/Wasser-Gemisches beträgt die Temperatur der so erhaltenen Polyester-Dispersion im allgemeinen ungefähr 70 bis ungefähr 100 °C. Die so erhaltene Polyester-Dispersion wird noch 2 bis 12, vorzugsweise 4 bis 6 Stunden, bei ggf. erhöhter Temperatur von bis zu 95 °C gerührt und anschließend auf Umgebungstemperatur abgekühlt.

Als Neutralisationsmittel können im allgemeinen alle herkömmlichen Neutralisationsmittel verwendet werden. Beispielshaft zu nennen sind Ammoniak, Triethylamin, Triethanolamin, Monoethanolamin, Diethanolamin, N-Methyldiethanolamin, Morpholin, N-Methylmorpholin, 2-Amino-2-methyl-1-propanol und Gemische aus zwei oder mehr davon. Vorzugsweise werden Monoethanolamin, Diethanolamin, N-Methylmorpholin, Methyldiethanolamin und Ammoniak verwendet. Ebenfalls verwendbar, jedoch weniger bevorzugt sind auch Alkalihydroxide wie beispielsweise Natrium- oder Kaliumhydroxid zu verwenden.

Ferner ist es möglich, nach Abschluß des Dispergierens einen Teil des Wassers wieder abzudestillieren, um einen möglichst hohen Gehalt an Feststoff zu erzielen.

Weiterhin kann die bei der Herstellung des Copolyesters erhaltene Schmelze zunächst mit einem geeigneten organischen Lösungsmittel, wie z.B. Methylethylketon oder Tetrahydrofuran, versetzt werden und das Polymer darin gelöst, anschließend mit einem Neutralisationsmittel und Wasser zum Neutralisieren und Dispergieren versetzt und anschließend einer Vakuumdestillation unterzogen werden, um das organische Lösungsmittel, das mit Wasser mischbar oder zumindest dispergierbar sein sollte, ggf. zusammen mit überschüssigem Wasser wieder abzudestillieren.

Im allgemeinen werden dabei wäßrige Polyester-Dispersionen mit einem Feststoffgehalt von ungefähr 10 bis ungefähr 90 Gew.-%, vorzugsweise von ungefähr 10 bis ungefähr 65 Gew.-%, weiter bevorzugt von ungefähr 15 bis ungefähr 40 Gew.-% und insbesondere von ungefähr 20 bis ungefähr 30 Gew.-%, erhalten.

Darüber hinaus betrifft die vorliegende Erfindung auch ein Düngemittelgranulat, das mit einer Umhüllung enthaltend einen Copolyester, wie oben definiert, oder einem Gemisch aus zwei oder mehr davon, umhüllt ist. In einer weiteren Ausführungsform betrifft die vorliegende Erfindung ein Düngemittelgranulat mit einer mehrschichtigen Umhüllung umfassend mindestens eine innere Schicht und eine äußere Schicht, dessen äußere Schicht den oben bereits ausführlich diskutierten Copolyester oder ein Gemisch aus zwei oder mehr davon enthält. Als innere Schicht(en) können prinzipiell alle für Umhüllungen von Düngemittel verwendbaren Substanzen, die verschieden von den erfindungsgmäß verwendeten Copolyestern sind, verwendet werden. Vorzugsweise enthält die mindestens eine innere Schicht der Umhüllung ebenfalls mindestens eine biologisch abbaubare Substanz, die jedoch verschieden von dem in der äußeren Schicht enthaltenen Copolyester oder dem Gemisch aus zwei oder mehr davon ist.

Diese Ausführungsform der vorliegenden Erfindung umfaßt die Ausgestaltungen, daß die Umhüllung zwei oder mehr Schichten verschiedener biologisch abbaubarer Copolyester enthält, die jeweils unter die Definition der erfindungsgemäß verwendeten Copolyester fallen, oder aber eine äußere Schicht, die den erfindungsgemäß verwendete Copolyester enthält, und eine oder mehrere innere Schichten enthaltend eine vorzugsweise ebenfalls biologisch abbaubare Substanz, die nicht unter die Definition des Copolyesters fällt.

Als besonders geeignete biologisch abbaubare Substanzen, die nicht unter die Definition des Copolyesters fallen, sind zu nennen:

Aliphatische Polyester, wie z.B. Adipinsäure-Butandiol-Polyester, Bernsteinsäure-Butandiol-Polyester, Adipinsäure-Neopentylglykol-Polyester, Adipinsäure-Ethylenglykol-Polyester, biologisch abbaubare Cellulosederivate, wie z.B. Nitrocellulose, Ethylcellulose und Triacetylcellulose, Poly(hydroxycarbonsäuren), wie z.B. Homo- oder Copolymere der im Rahmen der vorliegenden Anmeldung als Komponente (b1) beschriebenen Hydroxycarbonsäuren, Polyvinylalkohole, usw.

Ferner können als innere Schicht in der Umhüllung auch nährstoffhaltige Substanzen, die sich zum Beschichten eignen, verwendet werden.

Geeignete Düngemittelausgranulate, die sich für die Umhüllung eignen, sind allgemein bekannte Granulate von organischen oder mineralischen Düngemitteln, wie sie beispielsweise in Ullmann's Encyclopedia of Industrial Chemistry, 5. Aufl. 1987, Bd. A10, S. 323-431 (s. insbesondere Kapitel 2.1 und 4) beschrieben sind.

Es kommen beispielsweise Einzel- als auch Mehrnährstoffdünger in Betracht, die einzeln bzw. ggf. in Kombination Nährstoffe wie Stickstoff, Kali oder Phosphor gegebenenfalls in Form ihrer Salze enthalten. Beispiele hierfür sind NP-, NK-, PK- sowie NPK-Dünger, Stickstoffeinzeldünger, wie Kalkammoniumsalpeter, Ammoniumsulfat, Ammoniumsulfatsalpeter sowie Harnstoff, und Langzeitdünger, insbesondere auf Harnstoff-Basis, wie z.B. Isobutylidendiharnstoff, Crotonylidendiharnstoff, und Harnstoff-Formaldehyd-Kondensat.

Ferner können auch Düngemittelausgangsgranulate eingesetzt werden, die neben den genannten Hauptbestandteilen noch Salze von Mg, Fe, Mn, Cu, Zn, Mo und/oder B in untergeordneten Mengen, d.h. üblicherweise in Mengen von ungefähr 0.01 bis ungefähr 5 Gew.-%, enthalten.

Der längste mittlere Durchmesser der Düngemittelausgangsgranulate beträgt im allgemeinen ungefähr 0,5 bis ungefähr 10, vorzugsweise ungefähr 0,7 bis ungefähr 5 mm. Ihr Schüttgewicht liegt üblicherweise bei ungefähr 0,5 bis ungefähr 1,5 kg/l.

Weiterhin können die Düngemittelgranulate bzw. die Umhüllung weitere übliche Zusatzstoffe, wie z.B. Nitrifikationsinhibitoren, wie sie beispielsweise in der DE-OS 41 28 828, der DE 195 03 827.4 und der DE 196 31 764.9 und dem dort zitierten Stand der Technik beschrieben sind, insbesondere Pyrazol(derivat)e und Wachstumsregulatoren und Pflanzenschutz-Wirkstoffe, wie z.B. Herbizide, Fungizide und Insektizide, enthalten.

Weiterhin betrifft die vorliegende Erfindung auch ein Verfahren zur Herstellung der erfindungsgemäßen umhüllten Düngemittelgranulate, wobei eine wäßrige Polyesterdispersion, wie oben definiert, auf ein Düngemittelausgangsgranulat aufgebracht wird. Zur Herstellung eines umhüllten Düngemittelgranulats mit einer mehrschichtigen Umhüllung wird zusätzlich vor dem Aufbringen der wäßrigen Polyesterdispersion, wie oben definiert, mindestens eine Dispersion mindestens einer weiteren Substanz, die verschieden von dem in der äußeren Umhüllung enthaltenen Copolyester oder dem Gemisch aus zwei oder mehr davon ist, aufgebracht.

Vorzugsweise enthalten die wäßrigen Dispersionen ungefähr 10 bis ungefähr 65, weiter bevorzugt ungefähr 15 bis ungefähr 40 Gew.-% des Copolyesters bzw. der weiteren, vom Copolyester verschiedenen Substanz.

Den Lösungen bzw. Dispersionen können zusätzlich Substanzen, die der Steuerung der Freisetzung der Düngemittel dienen, zugesetzt werden. Dies sind vor allem Substanzen wie Lignin, Stärke und Cellulose. Deren Mengen betragen im allgemeinen ungefähr 0,1 bis ungefähr 5 Gew.-%, vorzugsweise ungefähr 0,1 bis 3 Gew.-%, bezogen auf die Gesamtmenge der Hüllsubstanz.

Das Aufbringen der Lösungen bzw. Dispersionen der die Umhüllung bildenden (Co)polymere erfolgt zweckmäßigerweise durch Aufsprühen bei einer Temperatur von im allgemeinen ungefähr 10 bis ungefähr 110 °C, vorzugsweise ungefähr 30 bis ungefähr 70 °C.

Um zu vermeiden, daß das Düngemittelausgangsgranulat bei Verwendung einer wäßrigen Dispersion bzw. Lösung bei dessen Aufbringen angelöst wird, bringt man pro Zeiteinheit nur eine begrenzte Menge der Lösung bzw. Dispersion auf und sorgt dafür, daß das Wasser rasch verdunsten kann.

Dies wird zweckmäßigerweise dadurch erreicht, daß man eine Wirbelschicht, die durch Aufwirbeln des Ausgangsdüngemittelgranulats mit einem Wirbelgas erzeugt wird, bei einer Temperatur von ungefähr 10 bis ungefähr 110 °C, vorzugsweise ungefähr 30 bis ungefähr 70 °C, mit den Lösungen bzw. Dispersionen besprüht. Nach dem Aufsprühen der Lösungen bzw. Dispersionen wird die Wirbelschicht im allgemeinen solange aufrechterhalten, bis das Lösungsmittel bzw. das Dispergiermedium verdunstet ist.

Demgemäß betrifft die vorliegende Erfindung auch ein Verfahren zur Herstellung eines umhüllten Düngemittelgranulats, wobei man eine Wirbelschicht, die man durch Aufwirbeln des Ausgangsdüngemittelgranulats mit einem Wirbelgas erzeugt, bei einer Temperatur von 10 bis 110°C mit einer wäßrigen Polyesterdispersion, wie oben definiert, besprüht oder zunächst mit mindestens einer Dispersion, die mindestens eine, vorzugsweise mindestens eine biologisch abbaubare, Substanz, die verschieden von dem in der äußeren Schicht enthaltenen Copolyester ist, besprüht und anschließend das so erhaltene Granulat mit einer wäßrigen Polyesterdispersion, wie oben definiert, besprüht.

Derartige Wirbelschicht-Auftragsverfahren sind allgemein bekannt und für die Herstellung von umhüllten Düngemittelgranulaten in der US-A-5 211 985 beschrieben. Mit diesen Verfahren lassen sich besonders gleichmäßige und dünne Hüllen erzeugen, die im allgemeinen eine Dicke von ungefähr 10 bis ungefähr 150 µm, vorzugsweise ungefähr 10 bis ungefähr 100 und insbesondere ungefähr 20 bis ungefähr 80 µm aufweisen.

Um die Neigung der umhüllten Düngemittelgranulate zum Verkleben und Verbacken zusätzlich zu verringern, bringt man ggf. im Anschluß an die Umhüllung der Granulate mit den hierin beschriebenen Substanzen vorteilhafterweise pulverförmige Feststoffe wie Talkum, SiO₂, Al₂O₃ oder TiO₂ auf.

Die umhüllten Düngemittelgranulate werden ggf. zusammen mit Nitrifikationsinhibitoren oder Wachstumsregulatoren nach üblichen Verfahren auf den Boden aufgebracht, wo sie die Nährstoffe über einen längeren Zeitraum hinweg freisetzen. Die Düngemittelgranulate zeichnen sich insbesondere dadurch aus, daß sie selbst bei erhöhter Temperatur vergleichsweise wenig zum Verkleben und Verbacken neigen und ihre Hülle unempfindlich gegen mechanische Beanspruchungen ist, wie sie typischerweise beim Umfüllen und Transport und insbesondere beim Austrag mittels schnell arbeitender moderner Maschinen auftreten.

Ferner betrifft die Erfindung umhüllte Düngemittelgranulate, die nach dem erfindungsgemäßen Verfahren hergestellt werden, sowie ein Düngeverfahren, bei dem man die erfindungsgemäßen umhüllten Düngemittelgranulate auf den Boden ausbringt, mit diesem vermischt oder in diesen einarbeitet.

Im folgenden sol die vorliegen Erfindung anhand einiger Beispiele zusammen mit dewn dieser Anmelduing anliegenden Zeichnungen erläutert werden.

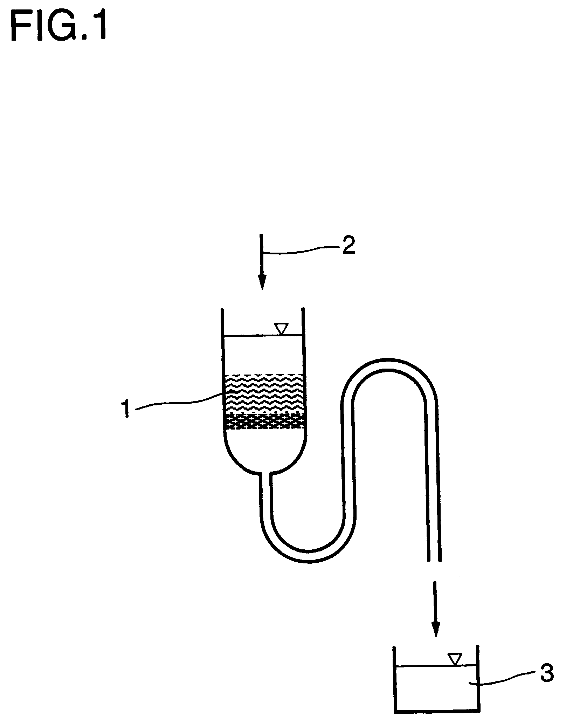

Dabei zeigt Figur 1 eine schematische Darstellung des Meßapparates zur Bestimmung der Hüllqualität.

Figur 2 zeigt die Stickstofffreisetzung von NPK-Düngemittel, die mit einem erfindungsgemäß verwendeten Poylester umhüllt sind.

Figur 3 zeigt die entsprechende Stickstofffreisetzung unter Verwendung einer Hülle auf Basis von Osmocote® plus 3-4M.

### BEISPIELE

Die in Tabelle 1 angegebenen aromatischen und aliphatischen Dicarbonsäuren und die Dihydroxyverbindungen wurden in den ebenfalls in Tabelle 1 angegebenen Mengen zusammen mit 100 ppm Tetrabutylorthotitanat (TBOT) (zugegeben als 10%ige Lösung in Toluol) in einen Vierhalskolben eingebracht und auf 170 bis 190 °C erhitzt und bei dieser Temperatur 3 bis 4 Stunden lang umgesetzt. Anschließend wurde die Temperatur auf 240 °C erhöht und der Neopentylglycolüberschuß unter Vakuum abdestilliert. Die OH-Zahl des Polyesters wurde gemessen, und durch Neopentylglycolzusatz wurde die OH-Zahl auf 24 eingestellt.

### Herstellung der Dispersionen

Die Copolyester PE 1 bis 3 (entsprechend Beispielen 1 bis 3) wurden in einem Reaktor bei 110 °C geschmolzen. Zu der erhaltetenen Polyester-schmelze wurden die in Tabelle 1 angegebenen Mengen an Pyromellitsäuredianhydrid (PMDA) zugegeben und bei 50 U/min gerührt. Die Temperatur wurde langsam auf 180 °C erhöht und Hexamethylendiisocyanat (HDI) in 0,5 ml-Portionen zugegeben, bis der in Tabelle 1 angegebene Gehalt an HDI erreicht wurde. Während dieser Zugabe wurde gleichzeitig das Drehmoment gemessen und die Schmelze bei Erreichen eines Drehmoments von 50 % (gemessen mit einem Labormeßgerät RE162 oder Fa. Janke & Kunkel) mit 300 ml Methylethylketon versetzt, wobei der jeweilige Copolyester gelöst wurde. Nach dem Abkühlen der Polymerlösung auf 40 °C wurden die Säuregruppen des Copolyesters mit einer stöchiometrischen Menge an Ethanolamin neutralisiert. Anschließend wurde 1 l Wasser in die Lösung gegossen und stark gerührt. Zu der gebildeten Dispersion wurden 200 ml Aceton gegeben. Anschließend wurde dieses bei 60 °C unter Vakuum zusammen mit MEK abdestilliert.

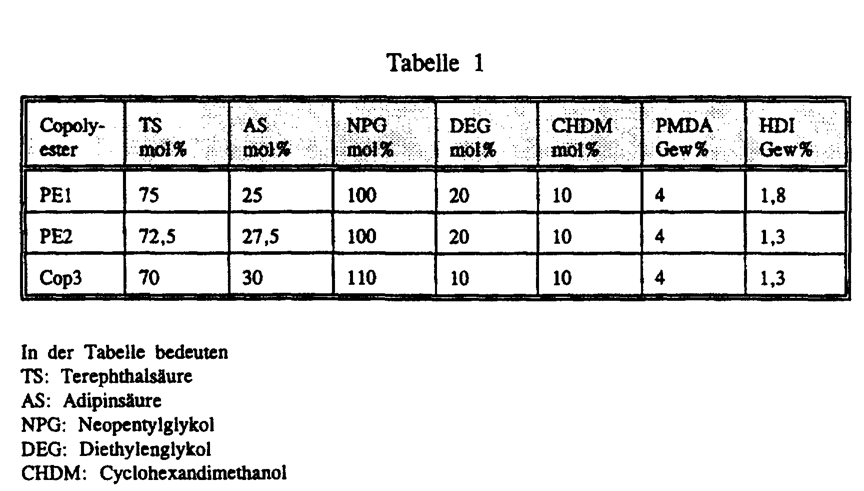

In einem handelsüblichen Wirbelbettcoater wurden die Düngemittelausgangsgranulate Nitrophoska® Perfekt (15 + 5 + 20 + 2) mit vorgewärmter Luft fluidiert und auf die gewünschte Temperatur erwärmt. Durch entsprechende Düsen wurden die jeweiligen wässrigen Polyesterdispersionen aufgedüst und dadurch die Düngemittelausgangsgranulate mit einer Hülle des Copolyesters überzogen. Die Sprührate wurde dabei so gewählt, daß ein Anlösen des Düngers vermieden wurde. Nach Beendigung des Aufsprühens wurde das erhaltene umhüllte Düngemittelgranulat noch einige Minuten im Wirbelbett getrocknet.

Dabei wurden umhüllte Düngemittelgranulate erhalten, die eine gute Verarbeitbarkeit aufwiesen und bei Umgebungstemperatur keine Klebrigkeit besaßen.

Zur Charakterisierung der Nährstoffreisetzung wurden die umhüllten Düngemittelgranulate einem Auslaugtest unterzogen. Hierbei wurde eine Probe des zu untersuchenden umhüllten Düngemittelgranulats (1) (10 g) in die in Fig. l skizzierte Vorrichtung gegeben und diese anschließend mit einem ml/min destillierten Wasser (2) bei 25 °C durchspült.

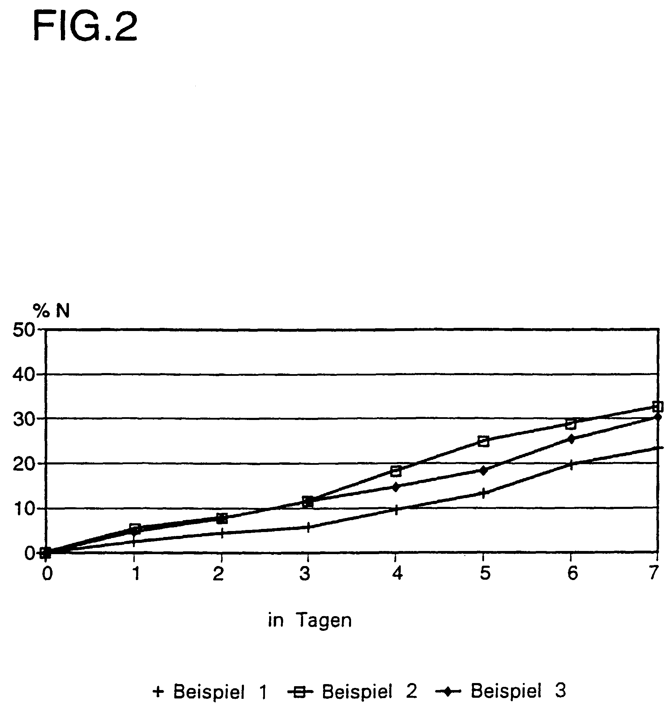

Die aufgefangene Spülflüssigkeit (3) wurde täglich auf ihren Nährstoffgehalt (meist nur Stickstoff) untersucht und das Ergebnis relativ zu dem Düngemittelausgangsgranulat vorhandenen Nährstoffmenge als Prozentzahl ausgedrückt. Die Ergebnisse der über mehrere Tage hinweg durchgeführten Untersuchungen sind in den beiliegenden Auslaufkurven gemäß Fig. 2 zusammengefaßt.

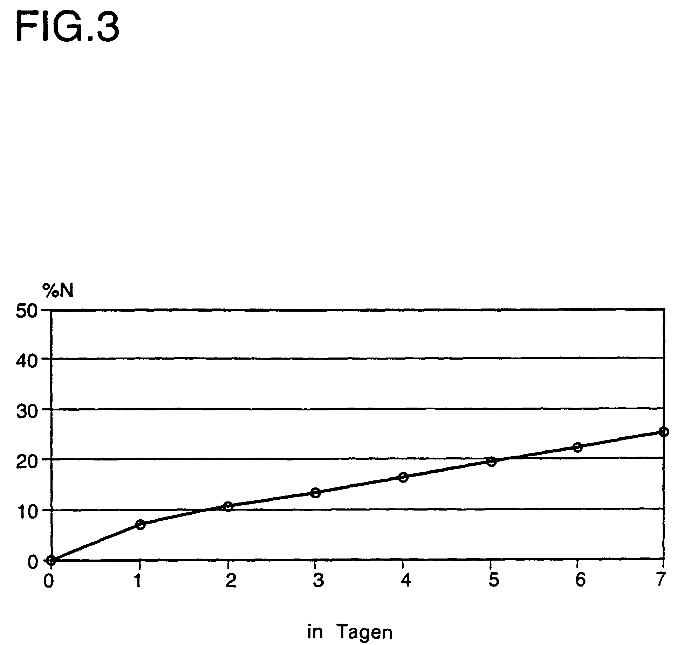

Fig. 3 zeigt die unter Verwendung eines Handelsprodukts mit nicht abbaubarer Hülle auf Basis von vernetzten pflanzlichen Ölen (Osmocote® Plus 3-4M der Firma Scotts) erzielten Resultate bezüglich der Stickstoffreisetzung.

Dabei fällt auf, daß die erfindungsgemäß umhüllten Düngemittelgranulate eine den bislang erhältlichen bezüglich ihrer Stickstoffreisetzung zufriedenstellenden Umhüllungen gleichwertig sind, jedoch darüberhinaus die vorteilhafte Eigenschaft der biologischen Abbaubarkeit besitzen und somit im Boden keinerlei Rückstände verursachen.

## Patentansprüche

1. Verwendung zur Umhüllung von Düngemittelgranulaten einer Polyester-dispersion enthaltend
(A) 20 bis 90 Gew.-% Wasser und
(B) 10 bis 80 Gew.-% eines biologisch abbaubaren Copolyesters (B), enthaltend Struktureinheiten, die sich sowohl von aliphatischen als auch aromatischen Carbonsäure(derivate)n ableiten,
erhältlich durch Umsetzung eines Gemisches, das umfaßt:
(a1) ein Gemisch, umfassend
(a11) 10 bis 95 mol-% einer aliphatischen Dicarbonsäure oder einer cycloaliphatischen Dicarbonsäure oder eines esterbildenden Derivats davon oder eines Gemisches aus zwei oder mehr davon,
(a12) 5 bis 90 mol-% einer aromatischen Dicarbonsäure oder eines esterbildenden Derivats davon oder eines Gemisches aus zwei oder mehr davon,
(a13) 0 bis 10 mol-% einer sulfonatgruppenhaltigen Verbindung oder eines Gemisches aus zwei oder mehr davon,
wobei die Summe der einzelnen mol-%-Angaben 100 beträgt,
(a2) eine Dihydroxyverbindung oder einen Aminoalkohol oder ein Gemisch aus zwei oder mehr davon,
wobei man das Molverhältnis von (a1) zu (a2) im Bereich von 0,4:1 bis 2,5:1 wählt,
(a3) 0 bis 10 Gew.-%, bezogen auf das Gemisch (a1), eines Kettenverlängerungsmittels oder eines Gemisches aus zwei oder mehr davon, und
(a4) 0 bis 20 Gew.-%, bezogen auf das Gemisch (a1), einer Verbindung mit mindestens drei zur Esterbildung befähigten Gruppen oder eines Gemisches aus zwei oder mehr davon,
wobei
die von der (cyclo)aliphatischen und aromatischen Carbonsäure abgeleiteten wiederkehrenden Einheiten statistisch verteilt sind, der Copolyester eine Viskositätszahl im Bereich von 5 bis 450 ml/g (gemessen in o-Dichlorbenzol/Phenol (Gew.-Verhältnis 50/50) bei einer Konzentration von 0,5 Gew.-% Copolyester bei einer Temperatur von 25 °C) aufweist, und der Anteil der Komponente (a13) und (a4) nicht gleichzeitig jeweils Null beträgt.

2. Verwendung zur Umhüllung von Düngemittelgranulaten einer Polyesterdispersion nach Anspruch 1 enthaltend
(A) 20 bis 90 Gew.-% Wasser und
(B) 10 bis 80 Gew.-% eines biologisch abbaubaren Copolyesters (B1), enthaltend Struktureinheiten, die sich sowohl von aliphatischen als auch aromatischen Carbonsäure(derivate)n ableiten,
erhältlich durch Umsetzung eines Gemisches, das umfaßt:
(a1) ein Gemisch, umfassend
(a11) 10 bis 95 mol-% einer aliphatischen Dicarbonsäure oder einer cycloaliphatischen Dicarbonsäure oder eines esterbildenden Derivats davon oder Gemischen aus zwei oder mehr davon,
(a12) 5 bis 90 mol-% einer aromatischen Dicarbonsäure oder eines esterbildenden Derivats davon oder eines Gemisches aus zwei oder mehr davon,
(a13) 0 bis 10 mol-% einer sulfonatgruppenhaltigen Verbindung oder eines Gemisches aus zwei oder mehr davon,
wobei die Summe der einzelnen mol-%-Angaben 100 beträgt,
(a2) eine Dihydroxyverbindung oder einen Aminoalkohol oder ein Gemisch aus zwei oder mehr davon,
wobei man das Molverhältnis von (a1) zu (a2) im Bereich von 0,4:1 bis 2,5:1 wählt,
(a3) 0 bis 10 Gew.-%, bezogen auf das Gemisch (a1), eines Kettenverlängerungsmittels oder eines Gemisches aus zwei oder mehr davon,
(a4) 0 bis 20 Gew.-%, bezogen auf das Gemisch (a1), einer Verbindung mit mindestens drei zur Esterbildung befähigten Gruppen oder eines Gemisches aus zwei oder mehr davon,
(b1) 0,01 bis unter 50 Gew.-%, bezogen auf das Gemisch (a1), einer Hydroxycarbonsäure (b1), die durch die folgenden Formeln IIa oder IIb definiert ist
HO―[―C(O)―G―O―]ₚH (IIa) 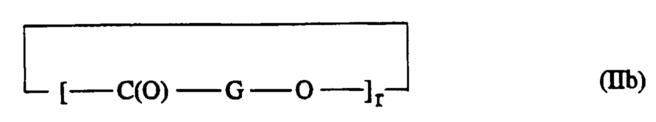
in denen p eine ganze Zahl von 1 bis 1.500 und r 1, 2, 3 oder 4 bedeuten, und G für eine Phenylen-, -(CH₂)ₙ-, wobei n eine ganze Zahl von 1, 2, 3, 4 oder 5 bedeutet, eine -C(R)H- oder eine -C(R)HCH₂-Gruppe steht, wobei R Methyl oder Ethyl ist,
oder eines Gemisches aus zwei oder mehr davon,
wobei die von der (cyclo)aliphatischen und aromatischen Carbonsäure abgeleiteten wiederkehrenden Einheiten statistisch verteilt sind, der Copolyester eine Viskositätszahl im Bereich von 5 bis 450 ml/g (gemessen in o-Dichlorbenzol/Phenol (Gew.-Verhältnis 50/50) bei einer Konzentration von 0,5 Gew.-% Copolyester bei einer Temperatur von 25 °C) aufweist, und der Anteil der Komponente (a13) und (a4) nicht gleichzeitig jeweils Null beträgt.

3. Düngemittelgranulat, das mit einer Umhüllung enthaltend einen Copolyester, wie in Anspruch 1 oder 2 definiert, oder einem Gemisch aus zwei oder mehr davon umhüllt ist.

4. Düngemittelgranulat mit einer mehrschichtigen Umhüllung umfassend mindestens eine innere Schicht und eine äußere Schicht, deren äußere Schicht einen Copolyester, wie in Anspruch 1 oder 2 definiert, oder ein Gemisch aus zwei oder mehr davon enthält.

5. Düngemittelgranulat nach Anspruch 4, wobei die mindestens eine innere Schicht der mehrschichtigen Umhüllung mindestens eine biologisch abbaubare Substanz, die verschieden von dem in der äußeren Schicht enthaltenen Copolyester oder dem Gemisch aus zwei oder mehr davon ist, enthält.

6. Verfahren zur Herstellung eines umhüllten Düngemittelgranulats, wobei eine wäßrige Polyesterdispersion, wie in Anspruch 1 oder 2 definiert, auf ein Düngemittelausgangsgranulat aufgebracht wird.

7. Verfahren zur Herstellung eines umhüllten Düngemittelgranulats mit einer mehrschichtigen Umhüllung, wobei zusätzlich vor dem Aufbringen der wäßrigen Polyesterdispersion, wie in Anspruch 1 oder 2 definiert, mindestens eine Dispersion enthaltend mindestens eine biologisch abbaubare Substanz, die verschieden von dem in der äußeren Schicht enthaltenen Copolyester oder dem Gemisch aus zwei oder mehr davon ist, aufgebracht wird.

8. Verfahren nach Anspruch 6 oder 7, wobei man eine Wirbelschicht, die man durch Aufwirbeln des Ausgangsdüngemittelgranulats mit einem Wirbelgas erzeugt, bei einer Temperatur von 10 bis 110 °C mit einer wäßrigen Polyesterdispersion, wie in Anspruch 1 oder 2 definiert, besprüht oder zunächst mit mindestens einer Dispersion enthaltend mindestens eine biologisch abbaubare Substanz, die verschieden von dem in der äußeren Schicht enthaltenen Copolyester ist, besprüht und anschließend das so erhaltene Granulat mit einer wäßrigen Polyesterdispersion, wie in Anspruch 1 oder 2 definiert, besprüht.

9. Umhülltes Düngemittelgranulat, erhältlich mittels eines Verfahrens gemäß einem der Ansprüche 6 bis 8.

10. Düngeverfahren, wobei man das umhüllte Düngemittelgranulat gemäß einem der Ansprüche 3 bis 5 und 9 auf den Boden ausbringt, mit diesem vermischt oder in diesen einarbeitet.

## Claims

1. The use, for coating fertilizer granules, of a polyester dispersion comprising
(A) 20 to 90% by weight of water and
(B) 10 to 80% by weight of a biodegradable copolyester (B) with structural units derived from both aliphatic and aromatic carboxylic acids or their derivatives, obtainable by reacting a mixture which comprises:
(a1) a mixture comprising
(a11) 10 to 95 mol% of an aliphatic dicarboxylic acid or of a cycloaliphatic dicarboxylic acid or of an ester-forming derivative thereof or of a mixture of two or more thereof,
(a12) 5 to 90 mol% of an aromatic dicarboxylic acid or of an ester-forming derivative thereof or of a mixture of two or more thereof,
(a13) 0 to 10 mol% of a sulfonate-containing compound or of a mixture of two or more thereof,
the total of the individual mol percentages being 100,
(a2) a dihydroxy compound or an amino alcohol or a mixture of two or more thereof,
the molar ratio of (a1) to (a2) being selected within the range of from 0.4:1 to 2.5:1,
(a3) 0 to 10% by weight based on the mixture (a1), a chain extender or a mixture of two or more thereof, and
(a4) 0 to 20% by weight based on the mixture (a1) of a compound having at least three groups capable of ester formation or of a mixture of two or more thereof,
the recurring units derived from the (cyclo)aliphatic and aromatic carboxylic acid being randomly distributed, the copolyester having a viscosity number in the range of from 5 to 450 ml/g (measured in o-dichlorobenzene/phenol (weight ratio 50/50) at a concentration of 0.5% by weight of copolyester at 25°C) and the amount of components (a13) and (a4) not simultaneously being in each case zero.

2. The use, for coating fertilizer granules, of a polyester dispersion as claimed in claim 1 comprising
(A) 20 to 90% by weight of water and
(B) 10 to 80% by weight of a biodegradable copolyester (B1) with structural units derived from both aliphatic and aromatic carboxylic acids or their derivatives, obtainable by reacting a mixture which comprises:
(a1) a mixture comprising
(a11) 10 to 95 mol% of an aliphatic dicarboxylic acid or of a cycloaliphatic dicarboxylic acid or of an ester-forming derivative thereof or of mixtures of two or more thereof,
(a12) 5 to 90 mol% of an aromatic dicarboxylic acid or of an ester-forming derivative thereof or of a mixture of two or more thereof,
(a13) 0 to 10 mol% of a sulfonate-containing compound or of a mixture of two or more thereof,
the total of the individual mol percentages being 100,
(a2) a dihydroxy compound or an amino alcohol or a mixture of two or more thereof,
the molar ratio of (a1) to (a2) being selected within a range of from 0.4:1 to 2.5:1,
(a3) 0 to 10% by weight, based on the mixture (a1), of a chain extender or of a mixture of two or more thereof, and
(a4) 0 to 20% by weight, based on the mixture (a1), of a compound having at least three groups capable of ester formation or of a mixture of two or more thereof,
(b1) 0.01 to less than 50% by weight, based on the mixture (a1), of a hydroxycarboxylic acid (b1) which is defined by the following formula IIa or IIb
HO―[―C(O)―G―O―]ₚH (IIa) 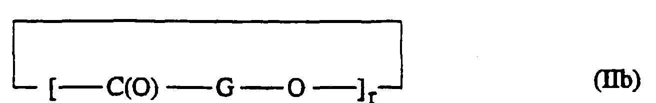
where p is an integer from 1 to 1,500 and r is 1, 2, 3 or 4, and G is a phenylene, -(CH₂)ₙ group, n being an integer of 1, 2, 3, 4 or 5, a -C (R) H group or a -C (R) HCH₂ group, R being methyl or ethyl,
or a mixture of two or more thereof,
the recurring units derived from the (cyclo)aliphatic and aromatic carboxylic acid being randomly distributed, the copolyester having a viscosity number in the range of from 5 to 450 ml/g (measured in o-dichlorobenzene/phenol (weight ratio 50/50) at a concentration of 0.5% by weight of copolyester at 25°C) and the amount of components (a13) and (a4) not simultaneously being in each case zero.

3. Fertilizer granules which are coated with a coating comprising a copolyester as defined in claim 1 or 2 or a mixture of two or more thereof.

4. Fertilizer granules with a multilayer coating comprising at least one inner layer and one outer layer, the outer layer of which comprises a copolyester as defined in claim 1 or 2 or a mixture of two or more thereof.

5. Fertilizer granules as claimed in claim 4, where the at least one inner layer of the multilayer coating comprises at least one biodegradable substance which differs from the copolyester in the outer layer or a mixture of two or more thereof.

6. A process for the preparation of coated fertilizer granules in which an aqueous polyester dispersion as defined in claim 1 or 2 is applied to fertilizer starting granules.

7. A process for the preparation of coated fertilizer granules with a multilayer coating, where additionally prior to applying the aqueous polyester dispersion as defined in claim 1 or 2, at least one dispersion comprising at least one biodegradable substance which differs from the copolyester in the outer layer or the mixture of two or more thereof is applied.

8. The process as claimed in claim 6 or 7, in which a fluidized bed, produced by fluidizing the starting fertilizer granules with a fluidizing gas, is sprayed with an aqueous polyester dispersion as defined in claim 1 or 2 at from 10 to 110°C or first sprayed with at least one dispersion comprising at least one biodegradable substance which differs from the copolyester in the outer layer, and subsequently the resulting granules are sprayed with an aqueous polyester dispersion as defined in claim 1 or 2.

9. Coated fertilizer granules obtainable by means of a process as claimed in one of claims 6 to 8.

10. A fertilizing method in which the coated fertilizer granules as claimed in one of claims 3 to 5 and 9 are applied to the soil, mixed with the soil or incorporated into the soil.

## Revendications

1. Utilisation, pour l'enrobage de granulés d'engrais, d'une dispersion de polyester contenant
(A) 20 à 90 % en poids d'eau et
(B) 10 à 80 % en poids d'un copolyester biodégradable (B) contenant des motifs de structure dérivant à la fois d'acides carboxyliques (ou dérivés) aliphatiques et aromatiques,
obtenu par réaction d'un mélange comprenant
(a1) un mélange de
(a11) 10 à 95 % d'un acide dicarboxylique aliphatique ou d'un acide dicarboxylique cycloaliphatique ou d'un dérivé estérifiable d'un tel acide ou d'un mélange de deux ou plusieurs tels composants,
(a12) 5 à 90 mol % d'un acide dicarboxylique aromatique où d'un dérivé estérifiable d'un tel acide ou d'un mélange de deux ou plusieurs tels composants,
(a13) 0 à 10 mol % d'un composé contenant des groupes sulfonate ou d'un mélange de deux ou plusieurs tels composés,
la somme des indications individuelles de mol % représentant 100 mol %,
(a2) un composé dihydroxylé ou un aminoalcool ou un mélange de deux ou plusieurs tels composants,
en respectant un rapport molaire (a1)/(a2) qui se situe dans l'intervalle de 0,4 : 1 à 2,5 : 1,
(a3) 0 à 10 % en poids, par rapport au mélange (a1), d'un agent d'allongement des chaînes ou d'un mélange de deux ou plusieurs tels agents d'allongement des chaînes et
(a4) 0 à 20 % en poids, par rapport au mélange (a1), d'un composé portant au moins trois groupes estérifiables ou d'un mélange de deux plusieurs tels composés,
sous réserve que
les motifs répétés dérivés des acides (cyclo)aliphatiques et aromatiques sont en répartition statistique, le copolyester a un indice de viscosité dans l'intervalle de 5 à 450 ml/g (mesure dans un mélange o-dichlôrobenzène/phénol, 50 : 50 en poids, à une concentration de 0,5 % en poids du copolyester et à la température de 25°C) et les proportions des composants (a13) et (a4) ne peuvent être toutes les deux nulles.

2. Utilisation, pour l'enrobage des granulés d'engrais, d'une dispersion de polyester selon la revendication 1, contenant
(A) 20 à 90 % en poids et
(B) 10 à 80 % en poids d'un copolyester biodégradable (B1) contenant des motifs de structure qui dérivent à la fois d'acides carboxyliques (ou dérivés) aliphatiques et aromatiques,
obtenu par réaction d'un mélange comprenant :
(a1) un mélange de
(a11) 10 à 95 mol % d'un acide dicarboxylique aliphatique ou d'un acide dicarboxylique cycloaliphatique ou d'un dérivé estérifiable d'un tel acide ou d'un mélange de deux ou plusieurs tels composants,
(a12) 5 à 90 mol % d'un acide dicarboxylique aromatique ou d'un dérivé estérifiable d'un tel acide ou d'un mélange de deux ou plusieurs tels composants,
(a13) 0 à 10 mol % d'un composé contenant des groupes sulfonate ou d'un mélange de deux ou plusieurs tels composés,
la somme des indications individuelles de mol % représentant 100 mol %,
(a2) un composé dihydroxylé ou un aminoalcool ou un mélange de deux ou plusieurs tels composés,
en respectant un rapport molaire (a1)/(a2) dans l'intervalle de 0,4 : 1 à 2,5 : 1,
(a3) 0 à 10 % en poids, par rapport au mélange (a1), d'un agent d'allongement des chaînes ou d'un mélange de deux ou plusieurs tels agents,
(a4) 0 à 20 % en poids, par rapport au mélange (a1), d'un composé contenant au moins trois groupes estérifiables ou d'un mélange de deux ou plusieurs tels composés,
(b1) 0,01 jusqu'à moins de 50 % en poids, par rapport au mélange (a1), d'un acide hydroxycarboxylique (b1) défini par l'une des formules IIa ou IIb ci-après
HO―[―C(O)―G―O―]ₚH (IIa) 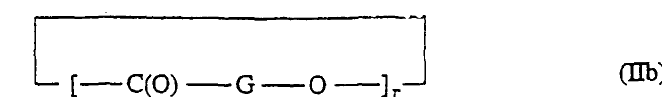
dans lesquelles p est un nombre entier allant de 1 à 1500 et r est égal à 1, 2, 3 ou 4, G représente un groupe phénylène, un groupe -(CH₂)ₙ- dans lequel n est un nombre entier égal à 1, 2, 3, 4 ou 5, un groupe -C(R)H- ou un groupe -C(R)HCH2-, R représentant un groupe méthyle ou éthyle,
ou d'un mélange de deux ou plusieurs tels acides hydroxycarboxyliques, sous réserve que les motifs répétés dérivés d'acides (cyclo)ali-phatiques et aromatiques sont en répartition statistique, le copolyester a un indice de viscosité dans l'intervalle de 5 à 450 ml/g (mesure dans le mélange o-dichlorobenzène phénol, 50 : 50 en poids, à une concentration de 0,5 % en poids du copolyester et à une température de 25°C) et les proportions des cdmposants (a13) et (a4) ne peuvent être toutes deux nulles.

3. Granulés d'engrais portant un enrobage contenant un copolyester tel que défini dans la revendication 1 ou 2, ou un mélange de deux ou plusieurs tels copolyesters.

4. Granulés d'engrais portant un enrobage à plusieurs couches comprenant au moins une couche intérieure et une couche extérieure, et dont la couche extérieure contient un copolyester tel que défini dans la revendication l ou 2 ou un mélange de deux ou plusieurs tels copolyesters.

5. Granulés d'engrais selon la revendication 4, pour lesquels au moins une couche intérieure de l'enrobage à plusieurs couches contient au moins une substance biodégradable autre que le copolyester contenu dans la couche extérieure ou que le mélange de deux ou plusieurs tels copolyesters.

6. Procédé pour préparer des granulés d'engrais enrobés, dans lequel on applique sur les granulés d'engrais mis en oeuvre une dispersion aqueuse de polyester telle que définie dans la revendication l ou 2.

7. Procédé pour préparer des granulés d'engrais enrobés par un enrobage à plusieurs couches, dans lequel, avant application de la dispersion aqueuse de polyester définie dans la revendication l ou 2, on applique en outre au moins une dispersion contenant au moins une substance biodégradable autre que le copolyester contenu dans la couche extérieure ou le mélange de deux ou plusieurs d'entre eux.

8. Procédé selon la revendication 6 ou 7, dans lequel on produit une couche tourbillonnaire par fluidisation des granulés d'engrais mis en oeuvre à l'aide d'un gaz fluidisant à une température de 10 à 110°C, et on pulvérise sur cette couche une dispersion aqueuse de polyester telle que définie dans la revendication l ou 2 ou bien on pulvérise d'abord au moins une dispersion contenant au moins une substance biodégradable autre que le copolyester contenu dans la couche extérieure puis on pulvérise les granulés obtenus par une dispersion aqueuse de polyester telle que définie dans la revendication 1 ou 2.

9. Granulés d'engrais enrobés obtenus par un procédé selon l'une des revendications 6 à 8.

10. Procédé de fumure dans lequel on applique sur le sol, on mélange avec la terre ou on incorpore dans la terre des granulés enrobés selon l'une des revendications 3 à 5 et 9.
